# EUROPEAN PATENT SPECIFICATION

(11) **EP 3 346 530 B1**
(45) Date of publication and mention of the grant of the patent: **21.06.2023**
(21) Application number: 16841197.3
(22) Date of filing: 18.05.2016
(51) Int. Cl.: H01M 8/0202, H01M 8/02, B32B 37/00, B30B 15/02, B32B 3/26, B30B 15/06, H01M 8/0223, H01M 8/0228, H01M 8/0232, H01M 8/0254, B32B 5/30, B32B 7/04, B32B 15/08, B32B 15/092, B32B 27/24, B32B 15/18, H01M 8/0267, B32B 7/12, B32B 15/04, B32B 27/38, H01M 8/1018

(54) **DEVICE FOR FORMING COATING FOR FUEL CELL SEPARATOR, AND FUEL CELL SEPARATOR**
VORRICHTUNG ZUR BILDUNG EINER BESCHICHTUNG FÜR EINEN BRENNSTOFFZELLENSEPARATOR UND BRENNSTOFFZELLENSEPARATOR
DISPOSITIF DE FORMATION D'UN REVÊTEMENT POUR SÉPARATEUR DE PILE À COMBUSTIBLE, ET SÉPARATEUR DE PILE À COMBUSTIBLE

(30) Priority: 31.08.2015 JP 2015171192
(43) Date of publication of application: 11.07.2018
(73) Proprietor: Toyota Shatai Kabushiki Kaisha, Kariya-shi, Aichi 448-8666 (JP)
(72) Inventor: SUZUKI, Yukihiro, Kariya-shi Aichi 448-8666 (JP); ASAOKA, Takatoshi, Kariya-shi Aichi 448-8666 (JP); MOROZUMI, Eiichiro, Kariya-shi Aichi 448-8666 (JP)
(74) Representative: Appleyard Lees IP LLP
(86) International application number: PCT/JP2016/064799
(87) International publication number: WO 2017/038165

(56) References cited:
- WO-A1-2009/063751
- WO-A1-2015/008838
- JP-A- H0 722 042
- JP-A- 2002 158 014
- JP-A- 2002 170 582
- JP-A- 2002 170 582
- JP-A- 2007 172 844
- JP-A- 2009 000 741
- JP-A- 2015 210 976
- US-A1- 2010 251 908

## Description

### TECHNICAL FIELD

The present invention relates to a device for forming a coating on a substrate, which is a component of a fuel cell separator, by thermal transfer.

### BACKGROUND ART

A fuel cell stack has a separator forming a passage for fuel gas, oxidation gas, or coolant water. Some of such separators have a substrate that is formed by pressing a metal plate such as a stainless steel plate or a titanium plate.

Conventionally, a corrosion-resistant and electrically conductive coating is formed on the surface of a substrate. This improves the corrosion resistance property of the separator and decreases the contact resistance between the separator and a membrane electrode assembly, which is arranged adjacent to the separator (see, for example, Patent Document 1).

As a method of forming such a coating on the surface of a substrate, there is a method of a technique described in Patent Document 1. The method applies coating material, which contains bonding material formed of thermosetting plastic and electrically conductive particles, on a surface of a substrate and hot-presses the substrate to harden the bonding material.

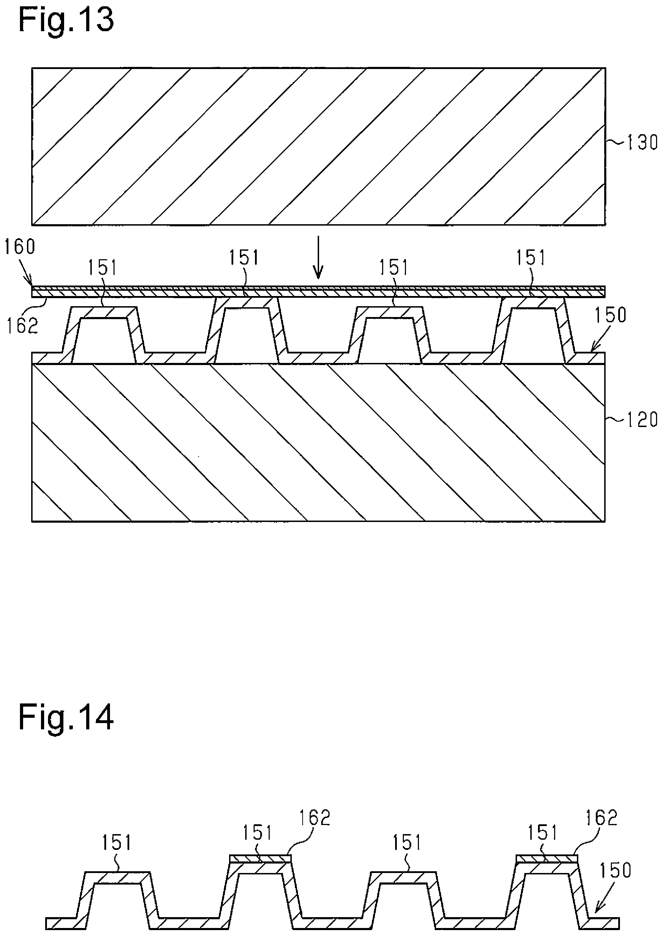

There is also a method that thermal-transfers a coating onto the surface of a substrate using a thermal-transfer film. First, a film 160 on which a coating 162 is formed is prepared in advance. Subsequently, as shown in Fig. 13, a substrate 150 is mounted on a pressing surface of a lower die 120. The thermal-transfer film 160 is then mounted on the substrate 150 such that the coating 162 of the film 160 faces the substrate 150. Then, an upper die 130 is moved toward the lower die 120 to clamp and press the substrate 150 and the thermal-transfer film 160 by means of the pressing surface of the lower die 120 and a pressing surface of the upper die 130. The lower die 120 and the upper die 130 are then electrically heated. Alternatively, there may be cases in which the lower die 120 and the upper die 130 are heated in advance before the substrate 150 and the thermal-transfer film 160 are mounted. In these manners, the coating 162 of the thermal-transfer film 160 is thermal-transferred onto top surfaces of projections 151 of the substrate 150.

### PRIOR ART DOCUMENTS

### Patent Documents

Patent Document 1: Japanese Laid-Open Patent Publication No. 2015-22885. US 2010/251908 A1 also describes an example of the related art.

### SUMMARY OF THE INVENTION

### Problems that the Invention is to Solve

With reference to Fig. 13, height variation may occur in the top surfaces of the projections 151 of the substrate 150 at the time of manufacturing the substrate 150. This hampers contact under pressure between the coating 162 of the thermal-transfer film 160 and comparatively low sections of the top surfaces of the projections 151 when the lower die 120 and the upper die 130 clamp and press the substrate 150 and the thermal-transfer film 160 together. Thermal-transfer of the coating 162 thus cannot be performed properly, as illustrated in Fig. 14. This hampers improvement of the corrosion resistance property and reduction in the contact resistance at the sections without thermal-transfer of the coating 162.

Accordingly, it is an objective of the present invention to provide a coating forming device for a fuel cell separator capable of thermal-transferring a coating properly on a substrate.

### Means for Solving the Problems

To achieve the foregoing objective and in accordance with the present invention, a device for forming a coating on a substrate, which is a component of a fuel cell separator, by thermal transfer, is provided. The device according to the invention is defined in claim 1 and includes a lower die and an upper die each having a heating portion. At least one of a pressing surface of the lower die and a pressing surface of the upper die is formed by a heat-resistant elastic member.

In this configuration, a thermal-transfer film is arranged between the substrate and at least one of the pressing surface of the lower die and the pressing surface of the upper die. In this state, the substrate and the film are clamped and pressed by the lower die and the upper die and heated. This causes thermo-compression bonding of the coating onto the surface of the substrate, thus thermal-transferring the coating from the thermal-transfer film onto the substrate. At this time, if the pressing surface that contacts the film is configured by a heat-resistant elastic member, the elastic member elastically deforms to allow the pressing surface to follow the shape of the surface of the substrate. This decreases the number of the sections of the surface that are not pressed against the film.

### EFFECTS OF THE INVENTION

According to the present invention, the coating is thermal-transferred properly onto the substrate.

### BRIEF DESCRIPTION OF THE DRAWINGS

Fig. 1 is a cross-sectional view showing a fuel cell stack, in a manner focused on a single cell, according to a first embodiment of a coating forming device for a fuel cell separator.
Fig. 2 is a partial perspective view showing a first separator, which is a component of the cell.
Fig. 3A is a cross-sectional view showing a coating forming device of the first embodiment in a state in which a pressing surface of a lower die and a pressing surface of an upper die are separate from each other.
Fig. 3B is a cross-sectional view showing a state of pressing.
Fig. 4 is a cross-sectional view showing an elastic member arranged in the coating forming device.
Fig. 5 is a cross-sectional view showing a thermal-transfer film of the first embodiment.
Fig. 6A is a cross-sectional view showing a procedure of manufacturing the thermal-transfer film of the first embodiment in a state in which a first coating material is applied onto a surface of a base film.
Fig. 6B is a cross-sectional view showing a state in which a second coating material is applied onto a surface of a first layer formed on the base film.
Fig. 6C is an enlarged cross-sectional view showing an obtained thermal-transfer film.
Fig. 7 is a cross-sectional view illustrating the operation of the first embodiment and showing the substrate and the thermal-transfer film in a state clamped by a lower die and an upper die.
Fig. 8 is a cross-sectional view showing a second separator, which is a component of a cell according to a second embodiment.
Fig. 9 is a cross-sectional view showing a state in which a third coating material is applied onto a surface of a flat separator of the second embodiment.
Fig. 10 is a cross-sectional view showing a coating forming device of the second embodiment.
Fig. 11 is an enlarged cross-sectional view showing the flat separator, a porous passage plate, and a thermal-transfer film before thermo-compression bonding.
Fig. 12 is a cross-sectional view showing a coating forming device of a modified example, in correspondence with the cross section of the device of the first embodiment taken along line 12-12 of Fig. 3A.
Fig. 13 is a cross-sectional view showing a conventional coating forming device for a fuel cell separator in a state in which a substrate and a thermal-transfer film are mounted on a lower die.
Fig. 14 is a cross-sectional view showing a conventional separator.

### MODES FOR CARRYING OUT THE INVENTION

### <First Embodiment>

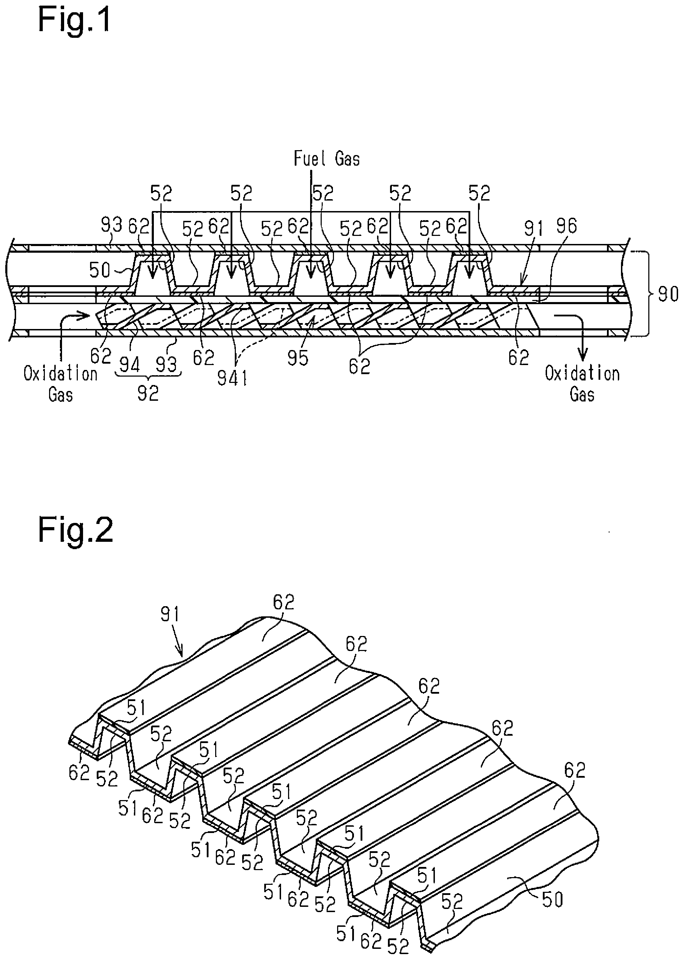

A first embodiment will now be described with reference to Figs. 1 to 7.

As illustrated in Fig. 1, a polymer electrolyte fuel cell (hereinafter, a fuel cell) includes a stack configured by stacking cells 90, each of which has a membrane electrode assembly 96 and a pair of separators 91, 92. The membrane electrode assembly 96 is arranged between the separators 91, 92.

The membrane electrode assembly 96 includes an electrolyte membrane formed by a solid polymer membrane, as well as a fuel electrode and an air electrode (neither is shown), between which the electrolyte membrane is arranged. The membrane electrode assembly 96 may be referred to as MEGA (Membrane Electrode Gas Diffusion Layer Assembly).

With reference to Figs. 1 and 2, a first separator 91 has a substrate 50, which is formed by pressing a titanium plate. As shown in Fig. 2, projections 51 are formed on an upper surface of the substrate 50. A groove 52 is formed between adjacent projections 51. Similarly, projections 51 are formed on a lower surface of the first separator 91, with grooves 52 formed between adjacent projections 51. The grooves 52 formed in the lower surface are located opposite to the projections 51 formed on the upper surface. The projections 51 formed on the lower surface are located opposite to the grooves 52 formed in the upper surface.

Referring to Fig. 1, the membrane electrode assembly 96 contacts the lower surface of the first separator 91. A flat separator 93, which is a flat metal plate, contacts the upper surface of the first separator 91. In the first embodiment, those of the grooves 52 of the first separator 91 facing the membrane electrode assembly 96 configure fuel gas passages. Those of the grooves 52 of the first separator 91 facing the flat separator 93 configure coolant water passages.

As shown in Figs. 1 and 2, a corrosion-resistant and electrically conductive coating 62 is formed, by thermal-transfer, on the top surface of each one of the projections 51 of the first separator 91.

With reference to Fig. 1, the substrate of the second separator 92 is configured by the flat separator 93 and a porous passage plate 94, which is arranged between the flat separator 93 and the membrane electrode assembly 96. The flat separator 93 and the porous passage plate 94 are made from titanium. The porous passage plate 94 is formed using, for example, metal lath. A number of through holes 941 are formed in the porous passage plate 94. The through holes 941 form a passage 95 for oxidation gas.

A coating forming device 10, which thermal-transfers the coating 62 onto the top surfaces of the projections 51 of the substrate 50, will hereafter be described.

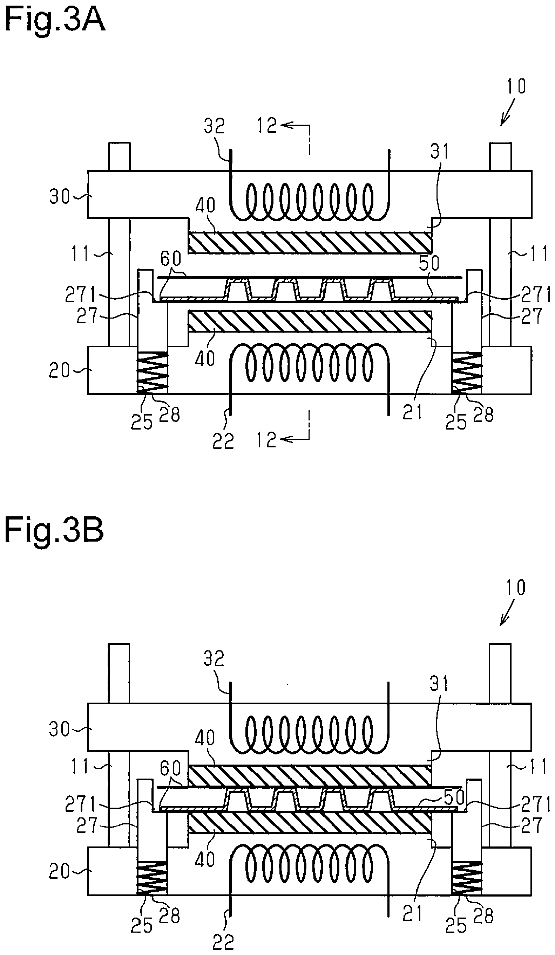

As illustrated in Figs. 3A and 3B, the coating forming device 10 includes a lower die 20, guide pillars 11, which are fixed to an outer peripheral section of the lower die 20 and extend upward, and an upper die 30, which is located above the lower die 20 and guided by the guide pillars 11 in a manner movable in the vertical direction.

The lower die 20 is formed of metal and has a heating portion 21, which projects upward. A heating wire 22 is incorporated in the lower die 20. The heating wire 22 is electrified to heat the heating portion 21. A sheet-shaped elastic member 40, which forms a pressing surface of the lower die 20, is arranged on the heating portion 21 of the lower die 20.

The upper die 30 is formed of metal and has a heating portion 31, which projects downward. A heating wire 32 is incorporated in the upper die 30. The heating wire 32 is electrified to heat the heating portion 31. A sheet-shaped elastic member 40, which forms a pressing surface of the upper die 30, is arranged under the heating portion 31 of the upper die 30.

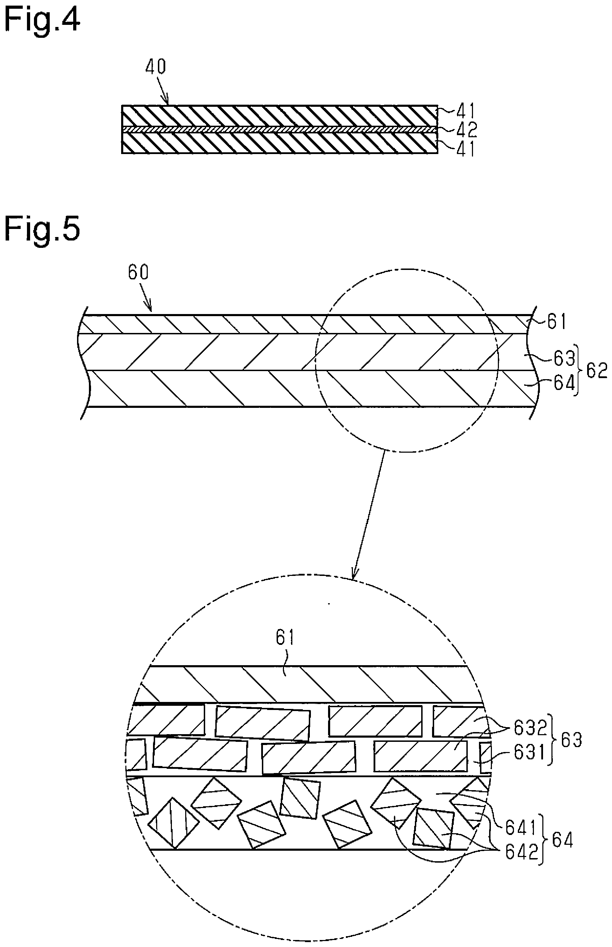

With reference to Fig. 4, each of the elastic members 40 has a pair of rubber sheets 41 and a restriction member 42. The rubber sheets 41 are formed of heat-resistant rubber material such as fluoro-rubber. The restriction member 42 is arranged between the two rubber sheets 41 and restricts extension of the rubber sheets 41 in the direction extending along the pressing surfaces (the left-right direction as viewed in Fig. 4). The restriction member 42 of the first embodiment is of reinforced cloth made of glass fiber and bonded to the rubber sheets 41.

As illustrated in Figs. 3A and 3B, accommodation holes 25, which are located in the outer periphery of the elastic member 40, are formed in the lower die 20. Support members 27, each of which is urged upward by a spring 28, are accommodated in the accommodation holes 25. A support surface 271 is formed on an upper end of each of the support members 27.

Referring to Fig. 3A, in a state in which the pressing surface of the upper die 30 is raised from the pressing surface of the lower die 20, the support surfaces 271 of the support members 27 are located between the two pressing surfaces.
A thermal-transfer film 60 will now be described.

As illustrated in Fig. 5, the thermal-transfer film 60 has a base film 61 formed of plastic such as polyethylene terephthalate and the coating 62, which is arranged on one of opposite surfaces of the base film 61. The coating 62 of the first embodiment is configured by two layers 63, 64.

The first layer 63 contains graphite particles 632 and first bonding material 631 and is applied directly on the base film 61. The first bonding material 631 of the first embodiment is, for example, polyvinylidene fluoride (PVDF) resin. A preferable range of the diameters of the graphite particles 632 is 0.1 to 100 µm. The first layer 63 may be configured simply by the graphite particles 632 without employing the first bonding material 631.

The second layer 64 contains electrically conductive particles 642 and second bonding material 641 and is applied on the first layer 63. The second bonding material 641 of the first embodiment is, for example, epoxy resin 641. It is preferable that the electrically conductive particles be of titanium nitride or the like, which is harder than the oxidation coating of the titanium forming the substrate 50 and is electrically conductive. A preferable range of the diameters of the electrically conductive particles 642 is 0.1 to 10 µm.

A procedure of manufacturing the thermal-transfer film 60 will hereafter be described.

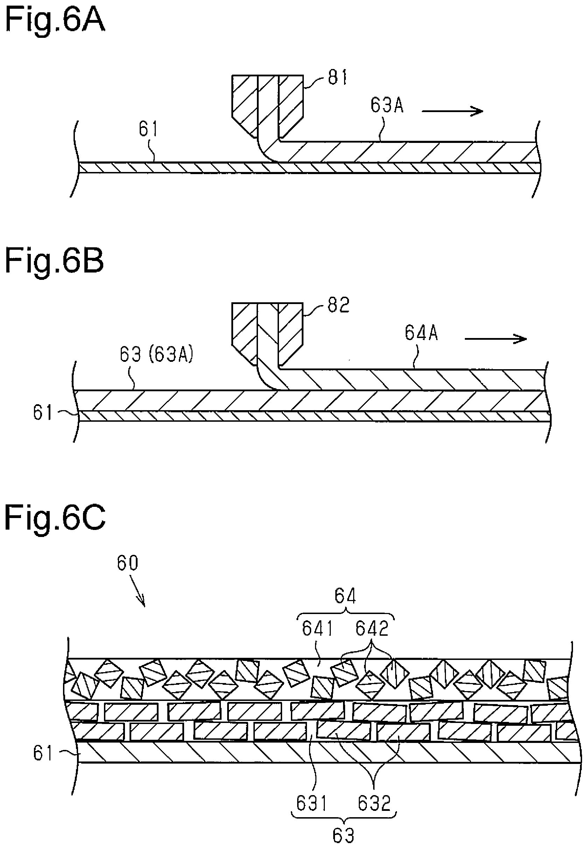

As shown in Fig. 6A, the base film 61 is conveyed in the direction indicated by the arrow in the drawing. A first coating material 63A is then applied onto the upper surface of the base film 61 from a coating head 81 of a coating machine (not shown). The first coating material 63A contains solvent in addition to the first bonding material 631 and the graphite particles 632. The solvent, the first bonding material 631, and the graphite particles 632 are uniformly mixed. The solvent may be, for example, N-Methyl-2-pyrrolidone (NMP).

Subsequently, with reference to Fig. 6B, the base film 61 is conveyed in the direction indicated by the arrow in the drawing. A second coating material 64A is then applied onto a surface of the first layer 63 (the first coating material 63A) formed in the base film 61 through a coating head 82 of a coating machine (not shown). The second coating material 64A contains solvent in addition to the second bonding material 641 and the electrically conductive particles 642. The solvent, the second bonding material 641, and the electrically conductive particles 642 are uniformly mixed. The solvent may be, for example, methyl ethyl ketone (MEK).

In this manner, the thermal-transfer film 60 is formed as illustrated in Fig. 6C.

A procedure of thermal-transferring the coating 62 onto a surface of the substrate 50 will hereafter be described.

As illustrated in Fig. 3A, the pressing surface of the upper die 30 is raised from the pressing surface of the lower die 20 with the support surfaces 271 of the support members 27 located between the pressing surfaces. In this state, to start the thermal transfer, two thermal-transfer films 60 and the substrate 50 are mounted on the support surfaces 271 of the support members 27. At this time, the thermal-transfer films 60 and the substrate 50 are supported by the support members 27 each at a position separate from both the pressing surface of the lower die 20 and the pressing surface of the upper die 30.

Then, with reference to Fig. 3B, the upper die 30 is lowered toward the lower die 20 to clamp and press the two, upper and lower, thermal-transfer films 60 and the substrate 50 by means of the pressing surface of the lower die 20 and the pressing surface of the upper die 30. The coatings 62 of the upper and lower thermal-transfer films 60 are thus pressed against the top surfaces of the projections 51 projected from the upper surface and the lower surface of the substrate 50.

Subsequently, the heating wires 22, 32 are electrified to heat the heating portions 21, 31, thus heating the substrate 50 to a predetermined temperature. The predetermined temperature is the temperature at which the epoxy resin, which is the thermosetting resin forming the second layer 64, hardens and is 200°C in the first embodiment. In this manner, the coatings 62 are thermo-compression bonded to the top surfaces of the projections 51 of the substrate 50. The coatings 62 are thus thermal-transferred from the thermal-transfer films 60 onto the substrate 50.

Afterwards, the upper die 30 is separated from the lower die 20 and the substrate 50 is removed from the coating forming device 10.

Operation of the present embodiment will now be described.

The two thermal-transfer films 60 and the substrate 50 are supported by the support members 27 each at a position separate from both the pressing surface of the lower die 20 and the pressing surface of the upper die 30. In this state, the thermal-transfer films 60 and the substrate 50 are pressed and heated sequentially. The thermal-transfer films 60 and the substrate 50 are thus maintained without contacting the pressing surface of the lower die 20 before being pressed. This restrains thermosetting of the epoxy resin forming the second layer 64, which would otherwise be brought about by heating of the thermal-transfer films 60 and the substrate 50 by the thermal received through the pressing surface. Such pressing before thermosetting of the epoxy resin facilitates movement of the electrically conductive particles and the graphite particles in the epoxy resin. This allows the electrically conductive particles 642 to pass through the oxidation coating of the substrate 50 and contact the body of the substrate 50. Also, the electrically conductive particles 642 and the graphite particles 632 contact each other.

Alternatively, the pressing surface of the lower die 20 and the pressing surface of the upper die 30 may be cooled to the ambient temperature before being caused to clamp and press the two thermal-transfer films 60 and the substrate 50, thus heating the heating portions 21, 31 in this state. However, in this case, the coating forming device 10 cannot be operated unless the pressing surface of the lower die 20 and the pressing surface of the upper die 30 are cooled to the ambient temperature. This lowers the operation efficiency of the coating forming device 10.

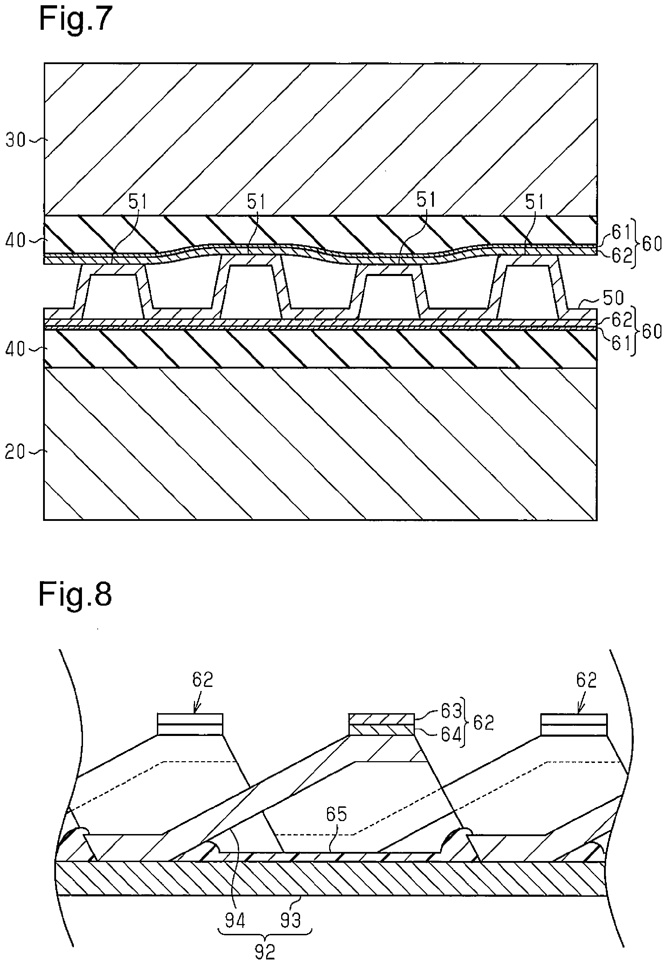

Further, as illustrated in Fig. 7, when the coating is thermal-transferred onto the top surfaces of the projections 51 of the substrate 50 by the coating forming device 10, the elastic members 40 elastically deform such that the pressing surface of the lower die 20 and the pressing surface of the upper die 30 follow the shapes of the top surfaces of the projections 51 on the front surface and the back surface of the substrate 50. This decreases the number of the sections of the top surfaces of the projections 51 that are not pressed against the thermal-transfer films 60. The coatings 62 are thus thermal-transferred properly onto the substrate 50. Specifically, Fig. 7 is illustrated in an exaggerated manner to vary the heights of the projections 51 on the upper surface of the substrate 50 from one position to another.

The coating forming device for a fuel cell separator according to the invention as defined in claim 1 has the advantages described below.
(1) The pressing surface of the lower die 20 and the pressing surface of the upper die 30, which are components of the coating forming device 10, are both formed by the heat-resistant elastic members 40. Therefore, the elastic members 40 elastically deform to allow the pressing surfaces of the lower die 20 and the upper die 30 to follow the shapes of the projections 51 on the front surface and the back surface of the substrate 50. This decreases the number of the sections of the top surfaces of the projections 51 that are not pressed against the thermal-transfer films 60. The coatings 62 are thus thermal-transferred properly onto the substrate 50. This decreases the contact resistance of the first separator 91.
(2) The elastic members 40 are arranged over the entire pressing surfaces of the lower die 20 and the upper die 30. The coatings 62 are thus thermal-transferred properly onto the entire sections of the top surfaces of the projections 51 of the substrate 50 that are pressed by the pressing surfaces.
(3) Each of the restriction members 42, which restricts extension of the two rubber sheets 41, the components of the elastic member 40, in the direction extending along the pressing surfaces, is arranged between the rubber sheets 41.
   In this configuration, the extension of the rubber sheets 41 in the direction extending along the pressing surfaces is restricted by each restriction member 42. Therefore, when the substrate 50 is clamped and pressed by the elastic members 40, the rubber sheets 41 are allowed to elastically deform in an effective manner such that the pressing surfaces follow the shapes of the top surfaces of the projections 51 of the substrate 50. This facilitates decrease of the number of the sections of the top surfaces of the projections 51 that are not pressed against the thermal-transfer films 60.
(4) Each of the restriction members 42 is configured by reinforced cloth formed of glass fiber. This ensures effective restriction of the extension of the rubber sheets 41 in the direction extending along the pressing surfaces.
(5) The coating forming device 10 includes the support members 27, which support the substrate 50 and the thermal-transfer films 60 in a state separate from both the pressing surface of the lower die 20 and the pressing surface of the upper die 30, at the time these pressing surfaces are separate from each other.

This configuration restrains early thermosetting of the epoxy resin and avoids limitation of the movement of the electrically conductive particles and the graphite particles in the epoxy resin. The electrically conductive particles are thus allowed to pass through the oxidation coating of the substrate 50 and contact the body of the substrate 50. Also, the electrically conductive particles and the graphite particles are allowed to contact each other. This facilitates formation of an electrically conductive path by the body of the substrate 50, the electrically conductive particles, and the graphite particles. The contact resistance of the first separator 91 is thus decreased properly.

Also, in the above-described configuration, the coating forming device 10 does not need to be held in a standby state until the pressing surface of the lower die 20 and the pressing surface of the upper die 30 cool down. This improves the operation efficiency of the coating forming device 10.

(6) The lower die 20 has the springs 28, which urge the support members 27 upward.

In this configuration, the support members 27 are moved upward by the urging force of the springs 28 simply by separating the upper die 30 upward from the lower die 20. The support surfaces 271 of the support members 27 are thus arranged between the pressing surfaces. That is, the position of each of the support members 27 is changed by means of a simple configuration.

### <Second Embodiment>

A second embodiment will now be described with reference to Figs. 8 to 11.

In the second embodiment, as illustrated in Fig. 8, the corrosion-resistant and electrically conductive coating 62 is formed, by thermal transfer, on the surface (the upper surface, as viewed in the drawing) contacting the membrane electrode assembly 96 of the porous passage plate 94, which is a component of the substrate of the second separator 92. The coating 62 is identical with the coating 62 of the first embodiment and has the first layer 63 and the second layer 64.

Also, the flat separator 93 and the porous passage plate 94, which are components of the second separator 92, are thermo-compression bonded to each other by means of third bonding material 65 formed of thermosetting plastic. The third bonding material 65 of the second embodiment is epoxy resin.

The flat separator 93 and the porous passage plate 94 are bonded together by means of the third bonding material 65 in a state superposed on each other at a predetermined surface pressure. The entire periphery of the mutually contacting surfaces of the flat separator 93 and the porous passage plate 94 is surrounded by the third bonding material 65. A slight amount of third bonding material 65 is also arranged between the mutually contacting surfaces of the flat separator 93 and the porous passage plate 94.

A procedure of forming the third bonding material 65 on a surface of the flat separator 93 will hereafter be described.

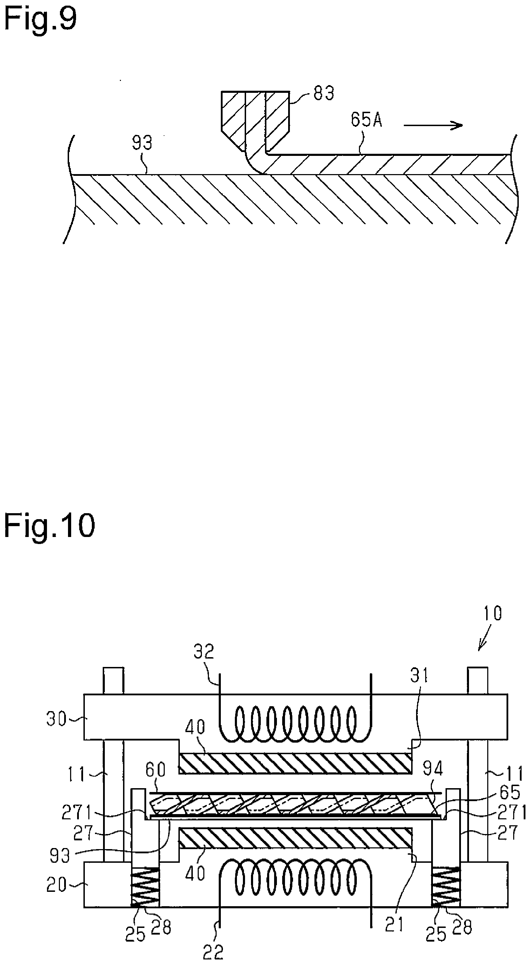

With reference to Fig. 9, the flat separator 93 is conveyed in the direction indicated by the arrow in the drawing. A third coating material 65A is applied onto a top surface of the flat separator 93 through a coating head 83 of a coating machine (not shown). This forms a layer of the third bonding material 65. The third coating material 65A contains solvent, in addition to the aforementioned epoxy resin. The solvent and the epoxy resin are uniformly mixed. The solvent may be, for example, methyl ethyl ketone (MEK).

Next, a method of forming the coating 62 on the upper surface of the porous passage plate 94 and, simultaneously, thermo-compression bonding the flat separator 93 with the lower surface of the porous passage plate 94 will be described.

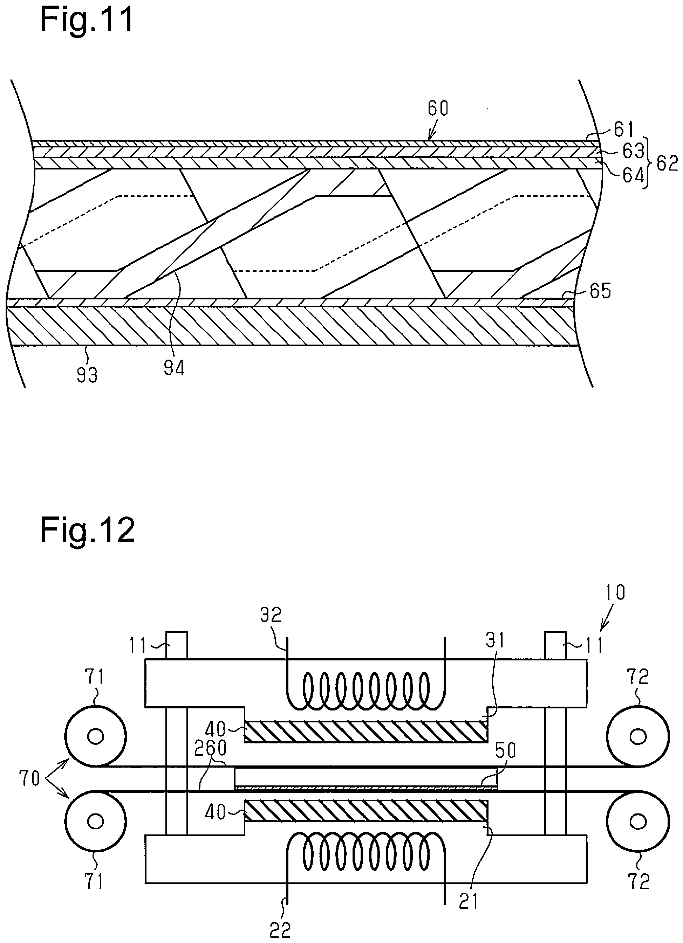

As illustrated in Figs. 10 and 11, the flat separator 93, in which the third bonding material 65 is formed, the porous passage plate 94, and the thermal-transfer film 60 are stacked in this order on the support surfaces 271 of the support members 27 of the coating forming device 10. The coating forming device 10 of the second embodiment is identical with the coating forming device 10 of the first embodiment.

Then, referring to Fig. 10, the upper die 30 is moved toward the lower die 20 to clamp and press the flat separator 93, the porous passage plate 94, and the thermal-transfer film 60 together by means of the pressing surface of the lower die 20 and the pressing surface of the upper die 30.

Subsequently, the heating wires 22, 32 are electrified to heat the corresponding heating portions 21, 31. The flat separator 93 and the porous passage plate 94 are thus heated to a predetermined temperature. The predetermined temperature is the hardening temperature of the epoxy resin, which is the second bonding material 641, a component of the second layer 64, and the third bonding material 65, and is set to 200°C in the second embodiment. This causes thermo-compression bonding of the coating 62 on a surface of the porous passage plate 94, thus thermal-transferring the coating 62 from the thermal-transfer film 60 onto the porous passage plate 94. Also, in a state in which the flat separator 93 is superposed on the lower surface of the porous passage plate 94, the porous passage plate 94 and the flat separator 93 are thermo-compression bonded to each other by means of the third bonding material 65. At this time, some of the third bonding material 65 on the flat separator 93 held between each set of mutually contacting surfaces of the flat separator 93 and the porous passage plate 94 is extruded toward the outer periphery. The entire periphery of the mutually contacting surfaces of the flat separator 93 and the porous passage plate 94 is thus surrounded by the extruded third bonding material 65.

Afterwards, the upper die 30 is separated from the lower die 20 to remove the porous passage plate 94 and the flat separator 93, which are now an integral body, from the coating forming device 10.

The coating forming device for a fuel cell separator according to the invention as defined in claim 1 and the fuel cell separator of the second embodiment, which have been described, have the advantages described below in addition to the advantages (1) to (6) of the first embodiment.

(7) The step of forming the coating 62 on the surface of the porous passage plate 94 that contacts the membrane electrode assembly 96 and the step of thermo-compression bonding the flat separator 93 and the porous passage plate 94 together are carried out simultaneously. As a result, the cell 90 and the stack are efficiently manufactured.

(8) The flat separator 93 and the porous passage plate 94 are thermo-compression bonded to and fixed to each other in a positioned state. Position displacement between the flat separator 93 and the porous passage plate 94 is thus avoided when the stack is assembled. The stack is thus assembled easily and accurately.

(9) The flat separator 93 and the porous passage plate 94 are bonded to each other by means of the third bonding material 65 in a state superposed on each other. The substrate of the flat separator 93 and the substrate of the porous passage plate 94 thus directly contact each other. This decreases the contact resistance compared to, for example, a configuration in which the coatings 62 are formed on a surface of the flat separator 93 and a surface of the porous passage plate 94 and the coating 62 of the flat separator 93 and the coating 62 of the porous passage plate 94 contact each other.

(10) The entire periphery of the mutually contacting surfaces of the flat separator 93 and the porous passage plate 94 is surrounded by the third bonding material 65. The third bonding material 65 thus seals the gap between the mutually contacting surfaces of the flat separator 93 and the porous passage plate 94. Also, the sections of the flat separator 93 other than the aforementioned mutually contacting surfaces are coated by the third bonding material 65. Corrosion of the flat separator 93 is thus stopped and durability is improved.

### <Modifications>

The above described embodiments may be modified as follows.

In the first embodiment, the lower die 20 and the upper die 30 may be heated in advance before the substrate 50 and the thermal-transfer films 60 are set between the dies 20 and 30. The second embodiment may be modified in the same manner.

The first separator 91, the flat separator 93, and the porous passage plate 94 may be formed by a metal plate other than the stainless steel plate or the titanium plate.

The coating 62 may be formed on at least one of the opposite surfaces of the porous passage plate 94, which is shown in Fig. 1.

In the second embodiment, the third coating material 65A may be applied on the surface of the porous passage plate 94 facing the flat separator 93. In this case, application of the third coating material 65A on the flat separator 93 may be omitted.

In the second embodiment, when the porous passage plate 94 and the flat separator 93 are thermo-compression bonded to each other, a coating may be thermal-transferred onto the surface of the flat separator 93 opposite to the surface facing the porous passage plate 94 using a film similar to the thermal-transfer film 60.

The support members 27 may be omitted.

As illustrated in Fig. 12, a thermal-transfer film 260 may be conveyed to the space between the pressing surface of the lower die 20 and the pressing surface of the upper die 30 by a conveyor device 70 employing rollers 71 and 72. That is, the conveyor device 70 includes the roller 71 around which the thermal-transfer film 260, which has an elongated shape, is wound and the roller 72 onto which the thermal-transfer film 260 is rewound. The rollers 71, 72 are driven to rotate by a non-illustrated motor. In this case, a thermal-transferred section of the thermal-transfer film 260 is automatically discharged from between the pressing surface of the lower die 20 and the pressing surface of the upper die 30. This eliminates troublesome operation such as mounting a thermal-transfer film on the pressing surface of the lower die 20. Specifically, the configuration shown in Fig. 12 corresponds to the cross-sectional configuration taken along line 12-12 of Fig. 3A. In Fig. 12, the illustration of the support members 27 is omitted.

If the coating 62 is thermal-transferred onto only one of the opposite surfaces of the substrate 50, only one of the lower die 20 and the upper die 30 may have the elastic member 40.

The restriction members 42 may be formed of fiber material other than the glass fiber, such as heat-resistant synthetic fiber including aramid fiber or carbon fiber.

The restriction members 42 may be omitted. In this case, the elastic members 40 may each be formed by a single rubber sheet 41.

### DESCRIPTION OF THE REFERENCE NUMERALS

10...Coating Forming Device, 11...Guide Pillar, 20...Lower Die, 21...Heating Portion, 22...Heating Wire, 25...Accommodation Hole, 27...Support Member, 271...Support Surface, 28...Spring (Urging Member), 30...Upper Die, 31...Heating Portion, 32...Heating Wire, 40...Elastic Member, 41...Rubber Sheet, 42...Restriction Member, 50...Substrate, 51...Projection, 52...Groove, 60, 260...Thermal-Transfer Film, 61...Base Film, 62...Coating, 63...First Layer, 63A...First Coating material, 631...First Bonding material, 632...Graphite Particle, 64...Second Layer, 64A...Second Coating material, 641...Second Bonding material, 642...Electrically Conductive Particle, 65...Third Bonding material, 65A...Third Coating material, 70...Conveyor Device, 71, 72...Roller, 81, 82, 83...Coating Head, 90...Cell, 91...First Separator, 92...Second Separator, 93...Flat Separator (Substrate), 94...Porous Passage Plate (Substrate), 941...Through Hole, 95...Passage, 96...Membrane Electrode Assembly

## Claims

1. A device for forming a coating (62) on a substrate (50), which is a component of a fuel cell separator, by thermal transfer, the device comprising a lower die (20) and an upper die (30) each having a heating portion (21, 31), wherein at least one of a pressing surface of the lower die (20) and a pressing surface of the upper die (30) is formed by a heat-resistant elastic member (40), the device being **characterized by**
a support member (27) that supports the substrate (50) and a thermal-transfer film (60, 260) in a state separate from both the pressing surface of the lower die (20) and the pressing surface of the upper die (30) when the pressing surfaces are separate from each other.

2. The device according to claim 1, wherein the elastic member (40) is arranged over the entire pressing surface.

3. The device according to claim 1 or 2, wherein the elastic member (40) includes a heat-resistant rubber sheet (41) forming the pressing surface and a restriction member (42) that restricts extension of the rubber sheet (41) in a direction extending along the pressing surface.

4. The device according to claim 3, wherein the restriction member (42) is a reinforced cloth formed of fiber material.

5. The device according to any one of claims 1 to 4, wherein the pressing surface of the lower die (20) and the pressing surface of the upper die (30) are both formed by the elastic member (40).

## Patentansprüche

1. Vorrichtung zur Bildung einer Beschichtung (62) auf einem Substrat (50), das eine Komponente eines Brennstoffzellenseparators ist, durch Thermotransfer, wobei die Vorrichtung ein Unterwerkzeug (20) und ein Oberwerkzeug (30) umfasst, die jeweils einen Heizteil (21, 31) aufweisen, wobei mindestens eine von einer Druckfläche des Unterwerkzeugs (20) und einer Druckfläche des Oberwerkzeugs (30) durch ein wärmebeständiges elastisches Glied (40) gebildet wird, wobei die Vorrichtung durch Folgendes gekennzeichnet ist:
ein Stützglied (27), das das Substrat (50) und eine Thermotransferfolie (60, 260) in einem sowohl von der Druckfläche des Unterwerkzeugs (20) als auch der Druckfläche des Oberwerkzeugs (30) getrennten Zustand stützt, wenn die Druckflächen voneinander getrennt sind.

2. Vorrichtung nach Anspruch 1, wobei das elastische Glied (40) über die gesamte Druckfläche angeordnet ist.

3. Vorrichtung nach Anspruch 1 oder 2, wobei das elastische Glied (40) ein wärmebeständiges Gummiflächengebilde (41), das die Druckfläche bildet, und ein Begrenzungsglied (42), das ein Ausdehnen des Gummiflächengebildes (41) in einer sich entlang der Druckfläche erstreckenden Richtung begrenzt, beinhaltet.

4. Vorrichtung nach Anspruch 3, wobei das Begrenzungsglied (42) ein aus Fasermaterial gebildetes verstärktes Tuch ist.

5. Vorrichtung nach einem der Ansprüche 1 bis 4, wobei die Druckfläche des Unterwerkzeugs (20) und die Druckfläche des Oberwerkzeugs (30) beide durch das elastische Glied (40) gebildet werden.

## Revendications

1. Dispositif de formation d'un revêtement (62) sur un substrat (50), qui est un composant d'un séparateur de pile à combustible, par transfert thermique, le dispositif comprenant une matrice inférieure (20) et une matrice supérieure (30) ayant chacune une portion de chauffage (21, 31), dans lequel au moins une surface parmi une surface de pression de la matrice inférieure (20) et une surface de pression de la matrice supérieure (30) est formée par un élément élastique résistant à la chaleur (40), le dispositif étant **caractérisé par**
un élément de support (27) qui supporte le substrat (50) et un film de transfert thermique (60, 260) dans un état séparé à la fois de la surface de pression de la matrice inférieure (20) et de la surface de pression de la matrice supérieure (30) lorsque les surfaces de pression sont séparées l'une de l'autre.

2. Dispositif selon la revendication 1, dans lequel l'élément élastique (40) est agencé sur toute la surface de pression.

3. Dispositif selon la revendication 1 ou la revendication 2, dans lequel l'élément élastique (40) inclut une feuille de caoutchouc résistant à la chaleur (41) formant la surface de pression et un élément de restriction (42) qui restreint l'extension de la feuille de caoutchouc (41) dans une direction s'étendant le long de la surface de pression.

4. Dispositif selon la revendication 3, dans lequel l'élément de restriction (42) est un tissu renforcé formé de matériau fibreux.

5. Dispositif selon l'une quelconque des revendications 1 à 4, dans lequel la surface de pression de la matrice inférieure (20) et la surface de pression de la matrice supérieure (30) sont toutes deux formées par l'élément élastique (40).
